(19) **Europäisches Patentamt / European Patent Office / Office européen des brevets**

(11) **EP 1 909 292 A1**

(12) **EUROPEAN PATENT APPLICATION**

(43) Date of publication:
09.04.2008 Bulletin 2008/15

(51) Int Cl.:
*G21C 3/332* (2006.01)

(21) Application number: 07018881.8

(22) Date of filing: 26.09.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 06.10.2006 US 544697

(71) Applicant: Westinghouse Electric Company LLC
Pittsburgh, PA 15230-0355 (US)

(72) Inventors:
• Aleshi, Yuriy
  Columbia
  South Carolina 29209 (US)
• Sparrow, James A.
  South Carolina 29063 (US)

(74) Representative: Gallo, Wolfgang
Ludwigstrasse 26
86152 Augsburg (DE)

(54) **Nuclear reactor fuel assemblies**

(57) A nuclear fuel assembly having improved dimensional stability to support aggressive fuel management wherein the fuel skeleton lateral stiffness is enhanced by the addition of a second joint attachment between the control rod guide thimble and spacer grid support sleeve.

*FIG. 5*
*PRIOR ART*

EP 1 909 292 A1

FIG. 6

**Description**

BACKGROUND OF THE INVENTION

1. Field of the Invention

The present invention relates to nuclear reactor fuel assemblies, and in particular to nuclear fuel assemblies with fortified skeletons that reduce the magnitude of bowing of the assembly which can occur during reactor operation, especially during extended burn-up cycles.

2. Related Art

A typical nuclear power reactor includes a reactor vessel housing a nuclear reactor core. Spaced radially, inwardly from the reactor vessel is a generally cylindrical core barrel and within the barrel is a former and a baffle system (hereafter referred to as the "baffle structure"), which permits transition from the cylindrical barrel to a squared-off, stepped periphery of the reactor core formed by the fuel assemblies arrayed therein.

The reactor core is composed of a large number of elongated fuel assemblies. Each fuel assembly includes a plurality of fuel rods containing fissile material, which reacts to produce heat. The fuel rods of each fuel assembly are held in an organized array by a plurality of grids spaced axially along the fuel assembly length and attached to a plurality of elongated control rod guide thimbles of the fuel assembly. The control rod guide thimbles are held together at their upper and lower ends respectively by an upper nozzle and a lower nozzle. The upper and lower nozzles, the control rod guide thimbles, instrumentation tubes and the grids are all affixed relative to each other and form the fuel assembly skeleton which is the structural framework that maintains the fuel rods in the desired spaced, parallel array.

During operation of the reactor, a coolant fluid such as water is typically pumped into the reactor vessel through a plurality of inlet nozzles. The coolant fluid passes downward through an annular region defined between the reactor vessel and the core barrel, turns in a lower plenum defined in the reactor vessel, then passes upwardly through the fuel assemblies of the reactor core, and exits from the vessel through a plurality of outlet nozzles extending through the core barrel. Heat energy, which the fuel rods of the fuel assemblies impart to the coolant fluid, is carried off by the fluid from the vessel. Due to the existence of holes in the core barrel, coolant fluid is also present between the barrel and a baffle structure and at a higher pressure than within the core. However, the baffle structure, together with the core barrel, do separate the coolant fluid from the fuel assemblies as the fluid flows downwardly through the annular region between the reactor vessel and core barrel.

As mentioned above, the baffle structure surrounds the fuel assemblies of the reactor core. Typically, the baffle structure is made of plates joined together by bolts. These bolts sometimes become loose, thereby developing a small gap between the baffle structure plates. When this happens, a coolant fluid jetting action takes place through the baffle structure in a radially inward direction from the exterior of the core to the interior thereof, due to the greater fluid pressure existing outside of the baffle than within the core. In some reactors, the baffle structure contains slots and holes intentionally placed to allow cooling of the core during an accident condition. As with the gaps that open due to loose bolts, the coolant flow enters the core through the baffle slots and holes and causes fluid jetting. These lateral hydraulic forces in addition to the turbulence of the coolant rising upwardly through the core as a result of mixing vanes on the fuel assembly grids, tend to cause small lateral distortions of the fuel assembly structures.

In addition, in order to maximize neutron economy it is highly desirable to make all structural components of the fuel assembly from Zircaloy. In contrast the reactor vessel internal structures, which support the fuel assemblies, are typically made from 304 stainless steel. The difference in thermal expansion between these materials, as well as radiation growth factors adds to the force acting on the fuel assemblies that cause the lateral distortions. The only upper limit on the total magnitude of such distortions is the summation of the lateral clearances between the fuel assemblies. Assemblies having all zircaloy structures are more susceptible to such deformations than those having stainless or Inconel structures because Zircaloy has a lower elastic modulus and tends to creep under irradiated conditions at a greater rate than stainless steel or Inconel, thereby assuming a slightly bowed shape in less time than the duration of a typical reactor cycle. Such distortions are undesirable because they may complicate refueling, introduce slight variations in local power density by virtue of the uneven water gap between assemblies, and may result in incomplete control rod insertions.

The magnitude of the nominal lateral clearance between adjacent fuel assemblies is determined by the outside dimensions of the fuel assembly grids. Compared with stainless steel or Inconel grids, Zircaloy grids have two distinct differences with respect to fuel assembly bowing. First, the initial clearance for the Zircaloy grids must include an allowance for irradiation induced lateral growth. Otherwise, clearances between irradiated assemblies will become so small that withdrawing and inserting individual assemblies during refueling may become difficult. Second, differential expansion between the stainless steel vessel internals structure and the Zircaloy grids causes the clearance at operating temperatures to increase substantially (up to 50 percent), thereby allowing space for larger bowing during operation.

It has been proposed to reduce the bowing by using one or more stainless steel or Inconel grids near the midplane of the assemblies. Although such a grid would limit bowing, it is not a desirable solution for two reasons. First, the replacement of even a single Zircaloy grid with one of stainless steel would increase parasitic neutron absorption. Second, the greater lateral stiffness of stainless steel grids relative to Zircaloy, coupled with the lower lateral clearance of the stainless steel grids, would cause impact loads associated with seismic disturbances or accident conditions such as loss of coolant, to be concentrated on the stainless grid, thereby necessitating an extremely strong grid.

The concern over bowed fuel assemblies has increased with extended fuel cycle burn-up strategies that have been employed in recent years to increase the efficiencies of reactor operation. The consequences of fuel assemblies bow increases with increased burn-up and resident time in the core. In general, the in-core operating environment mentioned above, i.e., neutronic flux, high temperature, aggressive environment, etc., together with loading factors (hold down force, gravity force, etc.) causes the change in the fuel assembly lateral stiffness and provide conditions conducive to the formation of fuel assembly distortions. The more aggressive fuel management, i.e., increasing maximum fuel burn-up and in-core resident time, requires a fuel assembly with an increased distortion resistance.

According, an improved fuel assembly structure is desired with enhanced lateral stiffness that will resist bowing during extended fuel burn-up cycles.

Furthermore, it is an object of this invention to provide such an improved fuel assembly that will not increase parasitic neutron absorption.

Additionally, it is an object of this invention to provide such an improved fuel assembly that will not substantially increase manufacturing costs.

## SUMMARY OF THE INVENTION

This invention achieves the foregoing objectives by enhancing the fuel assembly dimensional stability to support aggressive fuel management, i.e., increase burn-up and resident time in-core, and decrease the probability of an incomplete rod cluster control assembly insertion, a handling accident and other consequences of fuel assembly bow. The fuel assembly dimensional stability is achieved by enhancing the fuel assembly skeleton lateral stiffness through the introduction of an additional bulge joint between the control rod guide thimble and spacer grid sleeve. The additional bulge decreases "free play" in the bulge joint, increasing the skeleton lateral stiffness.

More particularly, the invention provides a fuel assembly having a top nozzle and a bottom nozzle and a plurality of elongated, spaced control rod guide tubes or thimbles spanning the longitudinal, axial dimension between the top nozzle and the bottom nozzle and attached at each end thereto. A plurality of spacer grids, each formed from a plurality of cells having an axial dimension, are arranged in a spaced, tandem array between the top nozzle and the bottom nozzle. The control rod guide tubes respectfully extend through at least some of corresponding ones of the plurality of cells. The control rod guide tubes are mechanically or metallurgically affix to each of the cells through which they pass at two, axial spaced locations.

In a preferred embodiment, a support sleeve is respectively attached metallurgically or mechanically to each of the corresponding ones of the plurality of cells through which the control rod guide tubes extend on the plurality of spacer grids. The support sleeves extend a given distance above and below the cells through which they pass and encircle the control rod guide tubes at least along an axial dimension that extends slightly above and below the axial dimension of the grid. The control rod guide tubes are mechanically or metallurgically attached to the corresponding support sleeve at the two spaced axial locations.

In another preferred embodiment, the two spaced axial locations are respectively above and below the axial dimension of the cell. Preferably the joints between the control rod guide tubes and the corresponding support sleeves are bulged at the two spaced locations.

## BRIEF DESCRIPTION OF THE DRAWINGS

A further understanding of the invention can be gained from the following description of the preferred embodiments when read in conjunction with the accompanying drawings in which:

FIG. 1 is a view, partially in section and partly in elevation, of a nuclear reactor to which the present invention may be applied;

FIG. 2 is a simplified enlarged plan view of the reactor taken along line 2-2 of FIG. 1;

FIG. 3 is an elevational view, partly in section, of one of the fuel assemblies employing a skeleton with an enhanced lateral stiffness in accordance with this invention;

FIG. 4 is an elevational view of one embodiment of a support grid of this invention;

FIG. 5 is a planned view of a portion of a fuel assembly grid that shows one cell through which a control rod guide tube and support sleeve extend, illustrating the prior art means of fastening the control rod guide tube to the support sleeve;

FIG. 6 is a planned view of the fuel assembly grid cell illustrated in FIG. 3 showing the improved connection between the support sleeve and the control rod guide tube of this invention;

FIG. 7 is a graphical illustration of the enhanced lateral stiffness provided by this invention with the vertical axis identifying lateral force (normalized) and the horizontal axis showing lateral displacement (normalized).

## DESCRIPTION OF THE PREFERRED EMBODIMENTS

In the following description like reference characters designate like or corresponding parts throughout the several views of the drawings. Also, in the following description, it is to be understood that such terms as "forward", "rearward", "left", "right", "upwardly", "downwardly" and the like are words of convenience and are not to be construed as limiting terms.

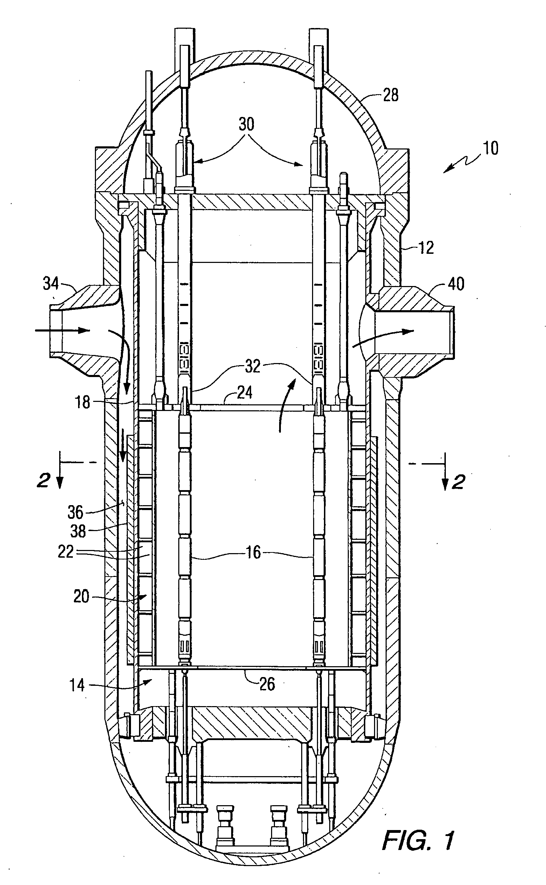

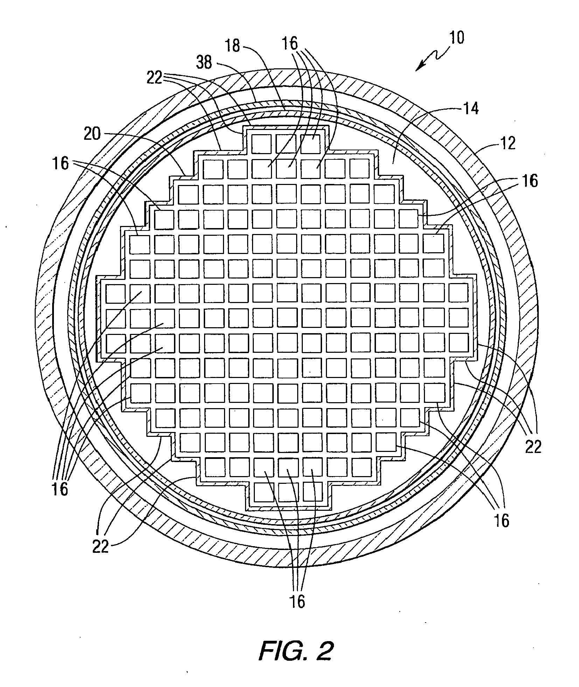

Referring now to the drawings, and particularly to FIGS. 1 and 2, there is shown a pressurized water nuclear reactor (PWR) being generally designated by reference character 10. The PWR 10 includes a reactor pressure vessel 12 which houses a nuclear reactor core 14 composed of a plurality of elongated fuel assemblies 16. The relatively few fuel assemblies 16 shown in FIG. 1 are for purposes of simplicity only. In actuality, as schematically illustrated in FIG. 2, the core 14 is composed of a great number of fuel assemblies 16.

Spaced radially, inwardly from the reactor vessel 12 is a generally cylindrical core barrel 18 and within the barrel 18 is a former and baffle system, hereinafter called a "baffle structure" 20, which permits transition from the cylindrical barrel 18 to a squared-off, stepped periphery of the reactor core 14 formed by the plurality of fuel assemblies 16 being arrayed therein. The baffle structure 20 surrounds the fuel assemblies 16 of the reactor core 14. Typically, the baffle structure 20 is made of plates 22 joined together by bolts (not shown). The reactor core 14 and the baffle structure 20 are disposed between upper and lower core plates 24,26 which, in turn, are supported by the core barrel 18.

The upper end of the reactor pressure vessel 12 is hermetically sealed by a removable hemispherical closure head 28 upon which are mounted a plurality of control rod drive mechanisms 30. Again for simplicity, only a few of the many control rod drive mechanisms 30 are shown. Each drive mechanism 30 selectively positions a rod cluster control mechanism 32 above and within some of the fuel assembly 16.

A nuclear fission process carried out in the fuel assemblies 16 of the reactor core 14 produces heat which is removed during operation of the PWR 10 by circulating a coolant fluid, such as light water, through the core 14. More specifically, the coolant fluid is typically pumped into the reactor pressure vessel 12 through a plurality of inlet nozzles 34 (only one of which is shown in FIG. 1). The coolant fluid passes downward through an annular downcomer region 36 defined between the reactor vessel 12 and the core barrel 18 (and a thermal shield 38 on the core barrel) until it reaches the bottom of the reactor vessel 12 where it turns 180° prior to flowing up through the lower core plate 26 and then the reactor core 14. On flowing upward through the fuel assembly 16 of the reactor core 14, the coolant fluid is heated to reactor operating temperatures by the transfer of heat energy from the fuel assembly 16. The hot coolant fluid then exits the reactor vessel 12 through a plurality of outlet nozzles 40 (only one being shown in FIG. 1) extending through the core barrel 18. Thus, heat energy which the fuel assembly 16 imparts to the coolant fluid, is carried off by the fluid from the reactor pressure vessel 12.

Due to the existence of pressure relief holes (not shown) in the core barrel 18, coolant fluid is also present between the barrel 18 and baffle structure 20 and at a higher pressure than exists within the reactor core 14. However the baffle structure 20, together with the core barrel 18, do separate the coolant from the fuel assemblies 16 as the fluid flows downwardly through the annular region 36 between the reactor vessel 12 and core barrel 18.

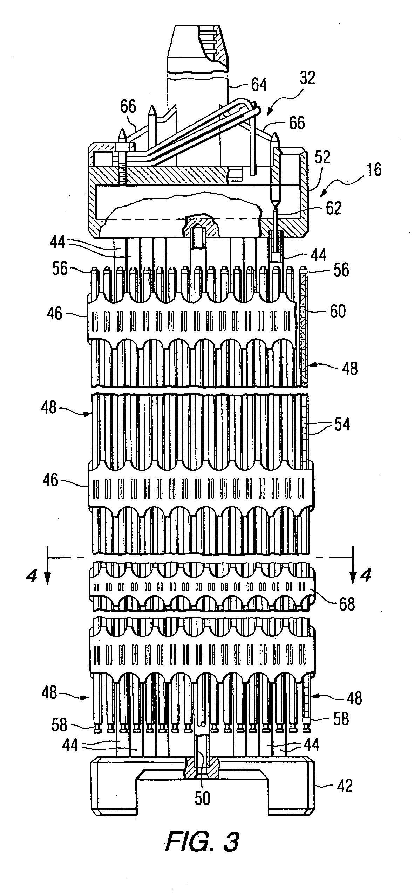

As briefly mentioned above, the reactor core 14 is composed of a large number of elongated fuel assemblies 16. Turning to FIG. 3, each fuel assembly 16, being of the type used in the PWR 10, basically includes a lower end structure or bottom nozzle 42, which supports the assembly on the lower core plate 26 and a number of longitudinally extending guide tubes or thimbles 44 (guide tubes and guide thimbles are used synominoulsy herein), which project upwardly from the bottom nozzle 42. The assembly 16 further includes a plurality of regular, traverse, main support grids 46 axially spaced along the lengths of the guide thimbles 44 and are attached thereto. The main support grids 46 are substantially, evenly, longitudinally spaced and support a plurality of elongated fuel rods 48 in an organized, spaced array. Additionally, each assembly 16 has an instrumentation tube 50 located in the center thereof and an upper end structure or top nozzle 52 attached to the upper ends of the guide thimbles 44. With such an arrangement of parts, the fuel assembly 16 forms an integral unit capable of being conveniently handled without damaging the assembly of parts.

Each fuel rod 48 of the fuel assembly 16 includes nuclear fuel pellets 54 and the opposite ends of each fuel rod are closed by upper and lower end plugs 56,58 to hermetically seal the rod. Commonly, a plenum spring 60 is disposed between the upper end plug 56 and the pellets 54 to maintain the pellets in a tightly stacked tandem array within the fuel rod 48. The fuel pellets 54 composed of fissile material are responsible for creating the reactive power which generates heat in the core 14 of the PWR 10. As mentioned, the coolant fluid is pumped upwardly through each of the fuel assemblies 10 of the core 14 in order to extract heat generated therein for the production of useful work.

To control the fission process, a number of control rods 62 of each rod cluster control mechanism 32 are reciprocally moveable in the guide thimbles 44 located at predetermined positions in the fuel assembly 16. However, not all of the fuel assemblies 16 have rod cluster control mechanisms 32, and thus control rods 62, associated therewith. Though typically, the fuel assemblies that accommodate control rods are of the same design as other fuel assemblies within the core that do not have control rods associated therewith. Specifically, each rod cluster control mechanism 32 is associated with a top nozzle 52 of the corresponding fuel assembly 16. The control mechanism 32 has an internally threaded cylindrical member 64 with a plurality of radially extending arms 66. Each arm 66 (also known as flukes) is interconnected to one or more control rods 62 such that the control mechanism 32 is operable to move the control rods 62 vertically in the guide thimbles 44 to thereby control the fission process in the fuel assembly 16, all in a well known manner.

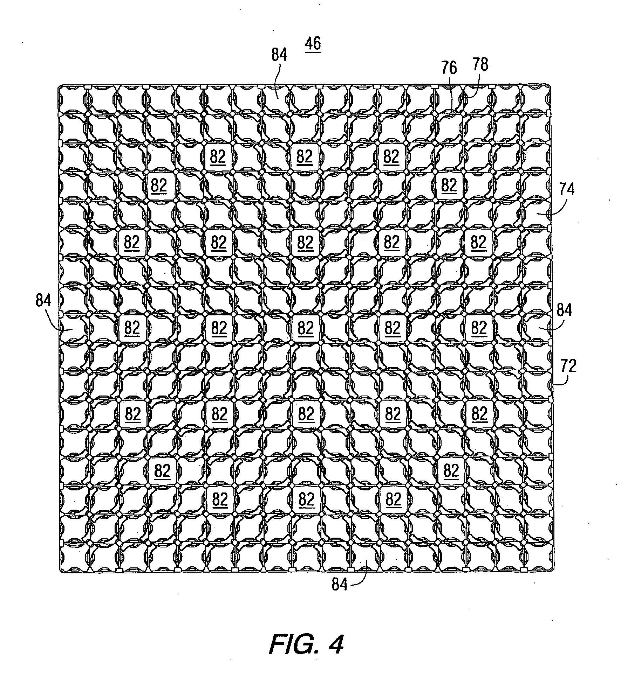

FIG. 4 illustrates a top view of a main support grid 46 for a square 17 x 17 fuel assembly. The main support grid 46 includes a plurality of interleaved inner and outer straps 76 and 78 arranged and connected together, such as by welding, in an egg crate configuration to define a plurality of hollow cells 74 open at their opposite ends. Though a 17 x 17 assembly is shown it should be appreciated that the application of the principals of this invention are not affected by the number of fuel elements in an assembly or by the assembly geometry. The lattice straps, which form the orthogonal members 76 and 78 shown in FIG. 4, are substantially identical in design. While the lattice straps 76 and 78 are substantially identical, it should be appreciated that the design of some of the lattice straps 76 may vary from other lattice straps 76 as well as some straps of 78 vary from other straps 78, to accommodate the guide tube and instrument tube locations. Reference character 82 in FIG. 4 identifies those cells that are attached to guide tubes and an instrumentation thimble while reference character 84 refers to the remaining cells which support fuel elements. Though not shown in FIG. 4 the cells 82 that support the control rod guide tubes or thimbles and the instrumentation thimble are provided with support sleeves. The support sleeves are either mechanically or metallurgically attached to the walls of the cells 82. Mechanical attachment might comprise for example an interference fit or fastener, while a metallurgical attachment might be achieved by welding or braising or other similar process in which the interfaced metal surfaces are fused. The control rod guide tubes or instrumentation thimbles fit within the support sleeves and are either metallurgically bonded or mechanically attached to the sleeve to affix the grid 46 to the tube or thimble 44.

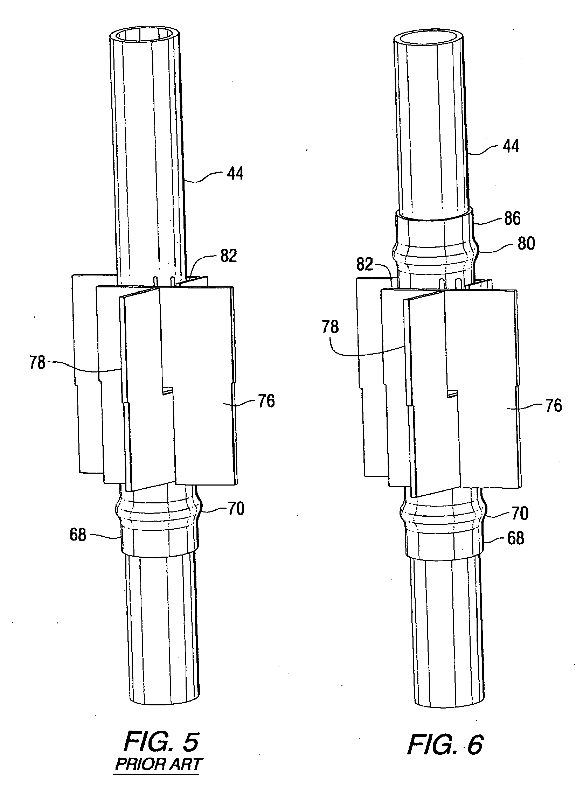

FIG. 5 shows the interception of four straps 76,78 to form a cell 82 through which the guide thimble 44 passes. In the prior art configuration shown in FIG. 5 a sleeve is metallurgically attached to the walls of the cell 82 and extends below the cell by a relatively small distance of approximately 0.5 to 1.0 inch (1.27 - 2.54 cm), for example, though it should be appreciated that the length of the extension may vary to some degree but preferably not to such an extent that the neutron economy is appreciably adversely affected. The guide thimble 44 is affix to the sleeve through the lower bulge 70. The same attachment is performed at each guide thimble grid cell intersection.

This invention enhances fuel assembly dimensional stability to support aggressive fuel management (increase burn-up and resident time in-core) and decreases the probability of incomplete rod cluster control assembly insertion, handling accidents and other consequences of fuel assembly bow. Fuel assembly dimensional stability is enhanced by improving the skeleton lateral stiffness; with an additional bulge joint between guide thimble and spacer grid support sleeve, as shown in FIG. 6. The support sleeve 68, in accordance with this invention, is extended a short distance of approximately 0.5 - 2 inches (1.27 - 5.08 cm) above the grid 46, though it should be appreciated that the length of the extension may vary to some degree but preferably not to such an extent that the neutron economy is appreciably, adversely affected. An additional bulge 80 is provided in the extended portion 86 of the sleeve 68. The bulge is formed in the same manner as the other bulge connections by inserting a dye into the control rod guide thimble 44 at the bulge location and expanding the dye so that it expands the control rod guide thimble wall and support sleeve wall to form the bulge joint. The additional bulge 80 decreases "free play" in the bulge joint. Test results demonstrate that the double bulge concept increases the skeleton lateral stiffness on the order of 40%. It should be appreciated that the lower portion of the support sleeve 68 and the upper portion of the support sleeve 86 can be made from two separated sleeves, each metallurgically affixed to the grid cell walls, without departing from the concept of this invention. Though not shown in Figures 5 and 6, for convenience, as can be appreciated from Figure 4 each of the grid cells 74 that support fuel rods have mixing vanes extending from their upper surfaces. The length of the support sleeve is extended in the adjacent cells through which the control rod guide thimbles pass so that the upper bulge does not interfere with the mixing vanes. Where separate upper and lower sleeves 68 and 86 are employed it is also desirable to extend the lower sleeve an equal amount to avoid the costly mistake of welding the wrong size sleeve in which the upper bulge 80 is to be made. Accordingly there are three reasons to increase the length of the sleeves in accordance with this invention: (i) to increase the supported length of the guide thimble; (ii) to eliminate a possibility of contact between a grid vane and the second bulge 80; and (iii) to reduce likelihood of manufacturing errors where separate upper and lower sleeves are employed.

Therefore, the double bulge connection provides a significant benefit to the skeleton and fuel assembly lateral stiffness to support aggressive fuel management with increase burn-up and in-core resident time. The double bulge skeleton design does not adversely affect the other fuel assembly characteristics, e.g., pressure drop, etc. This design modification may be easily implemented for any PWR or WER fuel assembly utilizing the bulge connection.

The fuel assembly distortion resistance depends on the fuel assembly lateral stiffness. The fuel assembly lateral stiffness is a combination of the fuel rod bundled stiffness and the skeleton stiffness.

The fuel rod bundled stiffness mainly depends upon the fuel rod geometry and the spacer grid spring forces. Unfortunately, the grid spring forces decrease during in-core radiation and the fuel rod bundled stiffness degrades. Increasing as-built spring forces does not provide a long term benefit in the assembly lateral stiffness.

The skeleton stiffness depends on the number, location and geometry of the guide thimbles and their capability to work together. The skeleton stiffness does not change significantly during irradiation. The number, location and geometry of the guide thimble are typically prescribed by the core internals design and cannot be change for existing nuclear plants. As mentioned above, the guide thimbles are connected to each other by spacer grids. Typically, spacer grid designs include a support sleeve 68 to provide the interface with the guide thimbles 44. The support sleeve is needed, especially when the support grid and guide thimble are made from dissimilar materials that are difficult to metallurgically join, e.g., Zircaloy and Inconel, to provide room for a mechanical connection. The sleeve may be attached to the guide thimble utilizing friction forces (interference fittings), welds or bulge connections. The skeleton lateral stiffness significantly depends on this connection. Therefore, a reasonable way to enhance skeleton stiffness is to improve the connection between the guide thimble and the spacer grid sleeve.

Traditionally, many fuel assembly designs utilize bulge expansion joints to connect the guide thimble to the spacer grid sleeve. Typically, one bulge is used to connect the guide thimble to the corresponding spacer grid sleeve at each spacer grid location as explained above. It is known that the bulge connection "free play" decreases the skeleton lateral stiffness.

The skeleton lateral stiffness maybe defined as follows:

$$I = \alpha \times \sum_{i=1}^{NGT}\left(IGT_i + a_i^2 \times FGT_i\right)$$

Alpha = the guide tube connection factor; NGT = the number of guide tubes and instrumentation tubes; IGT = guide tube or instrumentation tube moment of inertia; a = distance from the center of the guide tube to the bend principal axis; and FGT = guide tube cross-sectional area.

The guide thimble connection factor for the single bulge connection is approximately 0.3. It is noted that the bulge connection "free play" may be significantly decreased. However, the technical options to provide this improvement are limited when taking into account manufacturing limitations (for example: available manufacturing methods) and design limitations (for example: pressure drop limit).

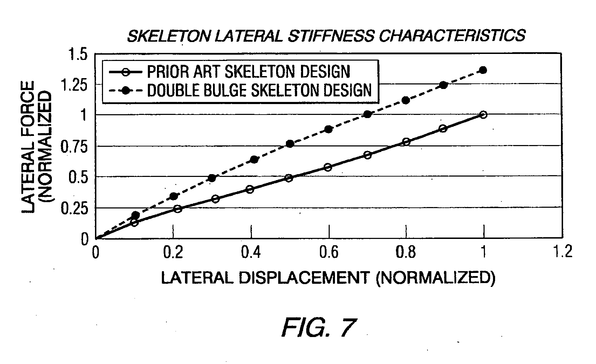

In order to enhance the skeleton lateral stiffness this invention introduces a second bulge well removed from the first bulge to connect the guide thimble to the spacer grid as presented in FIG. 6. The skeleton stiffness improvement was confirmed by the results of a lateral stiffness test as shown in FIG. 7. The skeleton stiffness was increased up to 40% as a result of this improvement. (Guide thimble connection factor was increased up to 0.42).

Accordingly, the double bulge connection provides a significant improvement to the skeleton and fuel assembly lateral stiffness to support aggressive fuel management with increased burn-up and in-core resident time. The double bulge skeleton design does not adversely affect the other fuel assembly characteristics (for example: pressure drop, etc.). This design modification may be easily implemented for any PWR or VVER fuel assembly utilizing the bulge connection.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breath of the appendant claims and any and all equivalents thereof.

REFERENCE NUMERICAL LIST

| 10 | PWR |
|----|-----|
| 12 | Pressure Vessel |
| 14 | Core |
| 16 | Fuel Assemblies |
| 18 | Core Barrel |
| 20 | Baffle Structure |
| 22 | Baffle Plates |
| 24 | Upper Core Plate |
| 26 | Lower Core Plate |
| 28 | Reactor Closure Head |
| 30 | Control Rod Drive Mechanism |
| 32 | Rod Cluster Control Mechanism |
| 34 | Reactor Inlet Nozzle |
| 36 | Downcomer |
| 38 | Thermal Shield |
| 40 | Reactor Outlet Nozzle |
| 42 | Fuel Assembly Bottom Nozzle |
| 44 | Guide Thimbles |
| 46 | Grids |
| 48 | Fuel Rods |
| 50 | Instrumentation Tube |
| 52 | Fuel Assembly Top Nozzle |
| 54 | Fuel Pellets |
| 56 | Top End Plug |
| 58 | Bottom End Plug |
| 60 | Plenum Spring |
| 62 | Control Rods |
| 64 | Drive Rod |
| 66 | Flukes |

68   Support Sleeve
70   Lower Bulge
72   Outer Strap
74   Grid Cells
76   Inner Grid Strap
78   Orthogonal Grid Strap
80   Added Upper Bulge
82   Guide Tube Cells
84   Fuel Rod Cells
86   Extended Upper Sleeve

**Claims**

1. A fuel assembly (16) for a nuclear reactor comprising:

   a top nozzle (52);
   a bottom nozzle (42);
   a plurality of elongated, spaced control rod guide tubes (44) spanning in the longitudinal, axial dimension between the top nozzle (52) and the bottom nozzle (42) and attached respectively at a first end to the top nozzle (52) and at a second end to the bottom nozzle (42);
   a plurality of spacer grids (46) each formed from a plurality of cells (82) having an axial dimension, arranged in a spaced tandem array between the top nozzle (52) and the bottom nozzle (42), the control rod guide tubes (44) respectively extending through at least some of corresponding ones of the plurality of cells (82), the control rod guide tubes (44) being mechanically or metallurgically affixed to each of the cells (82) of the spacer grids (46) through which they pass at two, axially spaced locations.

2. The fuel assembly of Claim 1, further comprising:

   a support sleeve (68) respectively attached metallurgically or mechanically to each of the corresponding ones of the plurality of cells (82) through which the control rod guide tubes (44) extend on the plurality of spacer grids (46), the support sleeves (68) extending a given distance above and below the cells (82) through which they pass and encircling the control rod guide tubes (44), the control rod guide tubes (44) being mechanically or metallurgically attached to the corresponding support sleeve (68) at the two spaced axial locations.

3. The fuel assembly of Claim 2 wherein the two spaced axial locations are respectively above and below the axial dimension of the cell (82).

4. The fuel assembly of Claim 3 wherein the control rod guide tubes (44) are respectively affixed to the corresponding support sleeves (68) by bulges (70, 80) at the two spaced locations.

5. The fuel assembly of Claim 4 wherein the spacer grids (46) have mixing vanes extending from an upper surface of at least some of the cells (82) and wherein the bulge (80) at an upper one of the two spaced locations is at an elevation above the mixing vanes for the grids (46) to which the corresponding control rod guide tube (44) is attached.

6. The fuel assembly of Claim 3 wherein the given distance is approximately 0.5 - 2.0 inches (1.27 -5.08 cm).

7. The fuel assembly of Claim 2 wherein the support sleeve comprises an upper support sleeve (86) and a lower support sleeve (68), the upper support sleeve (86) being affixed to an upper portion of the corresponding grid cell (82) and the lower support sleeve (68) being affixed to the lower portion of the grid cell (82).

8. The fuel assembly of Claim 7 wherein the upper support sleeve (86) and the lower support sleeve (68) have the same dimensions.

9. The fuel assembly of Claim 1 wherein the cells (82) are formed from an interlaced lattice of straps (76, 78) forming an egg-crate pattern.

FIG. 1

*FIG. 2*

FIG. 3

*FIG. 4*

FIG. 5
PRIOR ART

FIG. 6

*SKELETON LATERAL STIFFNESS CHARACTERISTICS*

FIG. 7

**European Patent Office**

**EUROPEAN SEARCH REPORT**

Application Number

EP 07 01 8881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 22 59 495 A1 (SIEMENS AG) 6 June 1974 (1974-06-06) * page 4, paragraph 1 * ----- | 1,9 | INV. G21C3/332 |
| X | US 4 788 026 A (WIDENER WADE H [US]) 29 November 1988 (1988-11-29) * column 4, line 63 - column 5, line 56; figures 1,9,10 * ----- | 2-4 | |
| A | US 4 124 443 A (BEZOLD HELMUT) 7 November 1978 (1978-11-07) * the whole document * ----- | 1-9 | |
| A | FR 2 341 180 A (KRAFTWERK UNION AG [DE]) 9 September 1977 (1977-09-09) * the whole document * ----- | 1-9 | |
| A | EP 0 133 745 A (BABCOCK & WILCOX CO [US]) 6 March 1985 (1985-03-06) * the whole document * ----- | 1-9 | |

TECHNICAL FIELDS SEARCHED (IPC)

G21C

The present search report has been drawn up for all claims

| Place of search | Date of completion of the search | Examiner |
|---|---|---|
| Munich | 5 February 2008 | Deroubaix, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 01 8881

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2008

| Patent document cited in search report | | Publication date | Patent family member(s) | | Publication date |
|---|---|---|---|---|---|
| DE 2259495 | A1 | 06-06-1974 | CH | 566621 A5 | 15-09-1975 |
| | | | ES | 421140 A1 | 01-07-1977 |
| US 4788026 | A | 29-11-1988 | DE | 3888496 D1 | 21-04-1994 |
| | | | EP | 0322600 A2 | 05-07-1989 |
| | | | ES | 2050146 T3 | 16-05-1994 |
| | | | JP | 2028598 A | 30-01-1990 |
| US 4124443 | A | 07-11-1978 | BE | 820567 A1 | 16-01-1975 |
| | | | CH | 569344 A5 | 14-11-1975 |
| | | | DE | 2350700 A1 | 17-04-1975 |
| | | | ES | 430785 A1 | 01-04-1977 |
| | | | FR | 2246939 A1 | 02-05-1975 |
| | | | GB | 1480932 A | 27-07-1977 |
| | | | SE | 406384 B | 05-02-1979 |
| | | | SE | 7412530 A | 10-04-1975 |
| FR 2341180 | A | 09-09-1977 | BE | 851285 A1 | 31-05-1977 |
| | | | DE | 2605594 A1 | 18-08-1977 |
| | | | ES | 455844 A1 | 01-02-1979 |
| | | | GB | 1531186 A | 01-11-1978 |
| | | | SE | 7700762 A | 13-08-1977 |
| | | | US | 4120751 A | 17-10-1978 |
| EP 0133745 | A | 06-03-1985 | CA | 1232089 A1 | 26-01-1988 |
| | | | DE | 3474874 D1 | 01-12-1988 |
| | | | ES | 8702040 A1 | 01-03-1987 |
| | | | JP | 1041954 B | 08-09-1989 |
| | | | JP | 1558223 C | 16-05-1990 |
| | | | JP | 60055289 A | 30-03-1985 |

EPO FORM P0459

For more details about this annex : see Official Journal of the European Patent Office, No. 12/82